# EUROPÄISCHE PATENTSCHRIFT

(11) **EP 4 090 588 B1**
(45) Veröffentlichungstag und Bekanntmachung des Hinweises auf die Patenterteilung: **17.12.2025**
(21) Anmeldenummer: 20828254.1
(22) Anmeldetag: 14.12.2020
(51) Int. Cl.: B64C 21/10, F15D 1/00

(54) **VERFAHREN ZUR HERSTELLUNG EINES MIT RIBLETS AUF UND/ODER IN DER OBERFLÄCHE VERSEHENEN OBJEKTES SOWIE DAMIT HERGESTELLTES OBJEKT**
METHOD FOR PRODUCING AN OBJET HAVING RIBLETS ARRANGED ON OR WITHIN ITS SURFACE AND OBJECT PRODUCED ACCORDING TO THE METHOD
PROCÉDÉ POUR LA FABRICATION D'UN OBJET MUNI DE NERVURES AGENCÉES SUR OU DANS SA SURFACE AINSI QUE OBJET FABRIQUÉ SELON CE PROCÉDÉ

(30) Priorität: 14.01.2020 AT 500212020
(43) Veröffentlichungstag der Anmeldung: 23.11.2022
(73) Patentinhaber: Leitl, Peter, 8041 Graz (AT)
(72) Erfinder: Leitl, Peter, 8041 Graz (AT)
(74) Vertreter: Wirnsberger & Lerchbaum Patentanwälte OG
(86) Internationale Anmeldenummer: PCT/AT2020/060460
(87) Internationale Veröffentlichungsnummer: WO 2021/142496

(56) Entgegenhaltungen:
- DE-A1- 102011 106 763
- DE-A1- 102017 201 782
- DE-A1- 3 609 541
- US-A- 4 706 910

## Beschreibung

Die Erfindung betrifft ein Verfahren gemäß Anspruch 1 zur Herstellung eines mit Riblets auf und/oder in der Oberfläche versehenen Objektes, welches im Einsatz von einem Fluid umströmt wird.

Des Weiteren betrifft die Erfindung ein entsprechend hergestelltes Objekt gemäß Anspruch 9.

Darüber hinaus betrifft die Erfindung ein Verfahren gemäß Anspruch 10 zur Modifizierung einer Oberfläche eines im Einsatz von einem Fluid umströmten Objektes wie eines Tragflügels, wobei auf und/oder in der Oberfläche eine Struktur mit Riblets geschaffen wird, welche einen Strömungswiderstand des Objektes verringert.

Bei der Bewegung von Objekten in einem Fluid, nämlich einem Gas oder einer Flüssigkeit, kommt es an einer mit dem Fluid in Kontakt stehenden Oberfläche des sich bewegenden Objektes zu einer laminaren oder turbulenten Strömung in oberflächennahen Bereichen des Objektes. Selbiges trifft umgekehrt zu, wenn sich nicht das Objekt, sondern das Fluid im oder um das dann feststehende Objekt bewegt. Auch eine gleichzeitige Bewegung von Objekt und Fluid ist möglich. Während eine laminare Strömung einen vergleichsweise geringen Reibungswiderstand zwischen Fluid und Objekt bewirkt, führt eine turbulente Strömung im oberflächennahen Bereich des Objektes dazu, dass ein Reibungswiderstand erhöht wird.

Wenn sich ein Objekt in einem Fluid bewegt oder in diesem bewegt wird oder auch umgekehrt das Fluid um das Objekt oder in diesem strömt, ist ein hoher Reibungswiderstand in der Regel unerwünscht, weil dieser beispielsweise bei Flugzeugen zu einem erhöhten Treibstoffverbrauch führt. Analoges gilt für andere Anwendungen, in welchen Objekte oder Teilobjekte in einem Fluid bewegt oder bei Stillstand des Objektes oder Teilobjektes von diesem umströmt werden. Beispielsweise betrifft dies Windkraftanlagen mit Rotorblättern, die sich in Luft bewegen oder, als Beispiel für den Fall eines stillstehenden Objektes, Rohre, welche von einem Fluid durchströmt werden. In jedem Fall scheint ein höherer Reibungswiderstand insofern nachteilig, als mehr Arbeit für die Erreichung eines Ergebnisses aufgebracht werden muss, als dies bei einem verminderten Reibungswiderstand der Fall wäre.

Insbesondere in der Luftfahrt wurde in den letzten Jahren versucht, einen Reibungswiderstand von Flugzeugen oder jedenfalls Teilen wie Tragflügel oder Rümpfe davon zu verringern, um damit den Kraftstoffbedarf zu verringern. Hierfür werden die mittlerweile schon seit Jahrzehnten bekannten Beobachtungen aus der Natur, wonach Haie Oberflächenstrukturen aufweisen, die einen Reibungswiderstand bei der Bewegung im Wasser vermindern, herangezogen. Die Haut von Haien weist eine strukturierte Oberfläche auf, welche an der Außenhaut sogenannte Riblets umfasst. Diese Riblets sind bei Haien in der Regel kurze längserstreckte Profile mit einer gewissen Höhe und einer gewissen Breite sowie einer gewissen Länge und einem bestimmten Anordnungsmuster. Diese Riblets sorgen dafür, dass eine turbulente Strömung im oberflächennahen Bereich einer Haut eines Haies verhindert oder zumindest verringert wird, sodass es auch in diesem Bereich zu einer weniger turbulenten und damit einen Reibungswiderstand weniger erhöhenden Strömung kommt. Entsprechende Kenntnisse aus der Biologie wurden in der Folge auf mechanische Systeme wie Flugzeuge, Rohre oder andere Anwendungsfälle übertragen, indem umströmte Oberflächen mit ähnlichen Riblets ausgestattet wurden.

Zurzeit scheint die Anwendung von Riblets in der Luftfahrtbranche die weitaus erfolgreichste Anwendung zu werden, und zwar deswegen, weil eine Kosteneinsparung in der Luftfahrt aus heutiger Sicht den weitaus größten Nutzen darstellen würde. Auch aus Sicht des Umweltschutzes würde eine nachhaltige Anwendung von Riblets in der Luftfahrtindustrie bzw. bei Flugzeugen nachhaltig sein, zumal in theoretischen Studien gezeigt wurde, dass bis zu 4 % eines Kraftstoffaufwandes bei entsprechend gut ausgelegten Riblets in der Luftfahrtindustrie bzw. dem Betrieb eines Flugzeuges eingespart werden könnten. In der US 4,706,910 ist eine entsprechende Anwendung von Riblets bei Flugzeugen dargestellt.

Eine Ausstattung von beispielsweise Flugzeugen mit Riblets kann anhand von entsprechenden Folien, die an einer äußeren Oberfläche, welche im Einsatz dem Fluid benachbart ist, erfolgen. Möglich ist es ebenso, dass ein Objekt, zum Beispiel ein Rohr, sogleich mit einer entsprechenden Struktur ausgebildet wird. Bei einem Rohr würde eine entsprechende Struktur innenseitig liegen, da die innenseitige Struktur bzw. der freie Durchmesser des Rohres von einem Fluid umströmt wird.

Eine plane Fläche oder ein Rohr stellen sehr einfache Anwendungsfälle für Riblets dar, unabhängig davon, ob diese nachträglich mit beispielsweise einer Folie mit entsprechender Ribletstruktur aufgebracht werden oder sogleich vorgesehen sind, insbesondere wenn das Objekt extrudiert, geprägt oder auf andere Weise in einem Umformschritt mit entsprechenden Strukturen ausgebildet wird, wie dies, wie nachfolgend noch erläutert wird, im Rahmen der Erfindung vorgesehen sein kann. Problematisch dabei ist allerdings, dass die äußere Struktur eines Flugzeuges wie auch eines natürlichen Objektes wie eines Haies im Querschnitt variiert. Dies bedeutet, dass es äußerst schwierig ist, einen Reibungswiderstand durch Anbringung von Riblets in einem hohen Maße so zu reduzieren, dass dies wirtschaftlich ist. Dies ist bei Flugzeugen dadurch bedingt, dass die Herstellung entsprechender Folien sehr aufwendig ist. Die Auslegung und Herstellung der Folien kann somit den erwarteten Nutzen im Betrieb eines Flugzeuges übersteigen, was selbstverständlich die Auslegung und Anbringung entsprechender Folien obsolet macht.

Aufgabe der Erfindung ist es, hierfür eine geeignete Lösung zu schaffen, die es ermöglicht, dass mit einem vertretbaren Aufwand eine für die Praxis zufriedenstellende Verringerung des Reibungswiderstandes eines relativ von einem Fluid umströmten Objektes geschaffen wird.

Diese Aufgabe wird in einer ersten Variante dadurch gelöst, dass bei einem Verfahren der eingangs genannten Art ein an einem Oberflächenbereich bei einer Umströmung des Objektes in einem Fluid entlang einer Strömungsrichtung wirkender Reibungswiderstand berechnet und über eine Länge des Oberflächenbereiches in der Strömungsrichtung zu einem kumulierten Reibungswiderstand summiert wird, wonach die Riblets auf und/oder in einem Teilbereich der Oberfläche vorgesehen werden, in dem eine Steigung des kumulierten Reibungswiderstandes mindestens 0,9, insbesondere von größer als 1,0 bis 0,9 beträgt, wobei der kumulierte Reibungswiderstand in % bezogen auf den gesamten Reibungswiderstand von 100 % und die Länge in % bezogen auf die gesamte Länge angegeben ist.

Im Rahmen der Erfindung wurde erkannt, dass es für Anwendungsfälle zur Reduktion eines Reibungswiderstandes ausreichend sein kann oder ist, wenn nicht eine gesamte Fläche eines umströmten Objektes mit Riblets ausgelegt wird, sondern lediglich jene Bereiche, in welchem ein kumulierter Reibungswiderstand einen gewissen Mindestwert erreicht. Insbesondere bei beispielsweise Tragflächenprofilen hat sich gezeigt, dass eine Anordnung von Riblets auf und/oder in der Oberfläche des Objektes in einem bestimmten Teilbereich bereits völlig ausreichend ist, um eine weitgehende Reduktion des Reibungswiderstandes zu erreichen. Es versteht sich, dass die nicht von den Riblets abgedeckten anderen Teilbereiche des Profils nach wie vor einer turbulenten Strömung unterliegen können, allerdings handelt es sich hierbei bei geeigneter Auslegung lediglich um weniger relevante Teilbereiche. Diese könnten zwar grundsätzlich auch optimiert werden, dies ist allerdings nicht erforderlich. Insgesamt ergibt sich somit das Bild, dass insbesondere mit einer einzigen Ribletstruktur, die in geeigneten Bereichen eines Objektes wie eines Tragflügels angebracht ist, eine prozentual zufriedenstellende Reduktion des Reibungswiderstandes erreicht werden kann. In der Folge können entsprechende Objekte so hergestellt werden oder werden Folien oder andere zu applizierende Komponenten hergestellt, welche auf die Objekte aufgebracht werden. Für den Fall von umströmten Objekten, die feststehend sind, gilt dies analog. Insgesamt ergibt sich mit einem erfindungsgemäßen Verfahren in Bezug auf einen Materialaufwand eine überproportional gute Verminderung eines Reibungswiderstandes und auch eine Kostenersparnis, weil weniger Material benötigt wird.

Die Teilbereiche, in dem eine Steigung des kumulierten Reibungswiderstandes beispielsweise von größer 1,0 bis 0,9 beträgt, sind vorzugsweise durchgehend vorgesehen. Dies bedeutet, dass in Bereichen, die außerhalb dieses Wertebereiches dienen, keine Ribletstrukturen vorhanden sind, sondern lediglich in den erwähnten Teilbereichen, in diesen aber flächendeckend oder zumindest im Wesentlichen flächendeckend. Sollten mehrere Teilbereiche mit entsprechenden Bedingungen vorliegen, so kann vorgesehen sein, dass mit Riblets bedeckte Bereiche mit unbedeckten Bereichen abwechseln, wobei eine Bedeckung nur in jenen Bereichen vorgesehen ist, welche die erläuterten Bedingungen auch erfüllen.

Entsprechend den vorstehenden Ausführungen kommt es im Rahmen der Erfindung nicht darauf an, ob sich ein Objekt in einem Fluid bewegt oder in diesem bewegt wird, oder das Objekt stillsteht und sich das Fluid um das Objekt bewegt. Das erfindungsgemäße Konzept ist somit in allen Fällen einer Relativbewegung anwendbar, also wenn sich das Objekt im Fluid bewegt, aber auch dann, wenn das Objekt stillsteht und sich das Fluid im oder um das Objekt herumbewegt. Ersteres ist beispielsweise der Fall, wenn sich ein Flugzeug oder ein Tragflügel in einem Medium wie Luft oder Wasser bewegt, letzteres dann, wenn das Objekt von einem Fluid umströmt wird, beispielsweise einem im Inneren strukturierten Rohr.

Der entlang der Strömungsrichtung wirkende Reibungswiderstand kann grundsätzlich beliebig berechnet werden. Insbesondere kann vorgesehen sein, dass dieser Reibungswiderstand punktuell berechnet wird. Allerdings ist auch eine kontinuierliche Berechnung des Reibungswiderstandes möglich.

Bei einem Profil wie einem Tragflügel, aber auch anderen Profilen kann sich ein Reibungswiderstand quer zur Achse einer Strömung unterschiedlich darstellen. Insofern kann es erforderlich sein, bei einer Berechnung einer Minimierung des Reibungswiderstandes durch Riblets so vorzugehen, dass ein Mittelwert über mehrere Berechnungen verwendet wird. Insbesondere kann vorgesehen sein, dass der entlang der Strömungsrichtung wirkende Reibungswiderstand an mehreren Punkten in einer Ebene quer zur Strömungsrichtung, insbesondere entlang einer Geraden liegenden Punkten in einer Ebene quer zur Strömungsrichtung, berechnet wird, wonach aus den so berechneten Reibungswiderständen der kumulierte Reibungswiderstand summiert wird. Dies bedeutet, dass über mehrere Punkte des Profils gemittelt wird, sodass diesbezüglich eine Optimierung geschaffen ist. Selbstverständlich könnten für jeden einzelnen Punkt eines solchen Querschnittes optimierte Bedingungen ermittelt werden, was allerdings eine Produktion einer Vielzahl von Folien oder, wenn eine direkte Einprägung oder eine andere Art der Einformung der Riblets direkt im Objekt erfolgt, bedingen würde, was allerdings nicht gewünscht ist. Vielmehr soll in einem einzigen Verfahren bereits ein wirkungstechnisch optimiertes Resultat erreicht werden.

Die Riblets, welche gemäß dem Verfahren der Erfindung angebracht, aufgeklebt, eingeformt oder auf irgendeine andere Weise vorgesehen werden, können in einem Bereich von 20 % bis 90 %, bevorzugt 25 % bis 85 %, insbesondere 30 % bis 80 %, der Längserstreckung der Oberfläche in Stromrichtung vorgesehen werden. Insbesondere ist bevorzugt, dass die Riblets in einem Bereich von 20 % bis 90 %, bevorzugt 25 % bis 85 % insbesondere 30 % bis 80 %, wie beispielsweise 25 % bis 65 % der Längserstreckung der Oberfläche in Strömungsrichtung vorgesehen werden. Je weniger an Fläche mit Riblets ausgestattet werden muss, umso weniger Material ist erforderlich.

Entsprechend den vorstehenden Ausführungen ist im Rahmen der Erfindung bevorzugt vorgesehen, dass die Riblets nur in einem Teilbereich der Oberfläche vorgesehen bzw. appliziert werden.

Applikation bedeutet, dass die Riblets entweder direkt auf der Oberfläche vorgesehen sind, beispielsweise mittels Einprägung, durch Extrudieren oder auf andere Art, oder nachträglich auf der Oberfläche mittelbar angebracht werden, insbesondere mittels einer Folie, welche die Riblets trägt bzw. in welcher die Riblets eingeformt sind. Grundsätzlich eignet sich jede beliebige Art einer direkten oder indirekten Umformung von Strukturen zur Ausbildung der Riblets, wobei die Umformung auch zunächst in einem gesonderten Schritt erfolgen kann, wonach ein so erstelltes Teil auf die zu applizierende Oberfläche aufgebracht wird. Die Oberflächen können beliebiger Natur sein, sind aber grundsätzlich so gewählt, dass der gewünschte Effekt zum Tragen kommt. Bei entsprechenden Strukturen handelt es sich insbesondere um Teilbereiche von Objekten, die in einem Fluid bewegt werden, beispielsweise Tragflügel oder Rümpfe von Flugzeugen, Rotorblättern, insbesondere solche von Windrädern, Rohren oder alle anderen Objekte, die mit einem Fluid unter Relativbewegung zwischen Objekt und Fluid in Kontakt stehen und wobei eine Verringerung eines Reibungswiderstandes an der Oberfläche des Objektes gewünscht ist. Dies kann beispielsweise auch Automobile oder Sportgeräte wie beispielsweise Surfbretter, Räder oder Skier, aber auch professionelle Sportkleidung oder dergleichen umfassen.

Wie erwähnt kann eine Einformung der Riblets direkt am Objekt bzw. in Teilbereichen einer Oberfläche eines Objektes erfolgen. Besonders bevorzugt ist allerdings vorgesehen, dass das Objekt eine, insbesondere biegbare, Folie ist, die entsprechend eingesetzt wird. Wird eine entsprechende Folie hergestellt, ist es möglich, bereits bestehende Objekte wie beispielsweise Flugzeuge nachträglich auszurüsten. Dies ist insbesondere dann von Vorteil, wenn wie bei Flugzeugen eine besonders lange Lebensdauer eines Objektes gegeben ist. Durch das erfindungsgemäße Konzept können so bestehende Objekte wie Flugzeuge nachträglich unter Erreichung der gewünschten Wirkung, in diesem Fall eine Kraftstoffreduktion, adaptiert werden.

Wenn eine Folie vorgesehen ist, kann diese durch eine nummerische Berechnung, insbesondere nach der Finite-Volumen-Methode (Computational Fluid Dynamics, CFD), geeignet ausgelegt werden. Eine Herstellung einer Folie selbst kann beispielsweise durch Prägen, Extrudieren, Aufschweißen oder auf andere Weise erfolgen. Bevorzugt wird die Folie dabei als Meterware bereitgestellt, sodass diese für den Einsatz geeignet abgelängt werden kann, was ein rasches Aufbringen bzw. eine rasche Nachrüstung ermöglicht.

Entsprechend den vorstehend dargelegten Vorteilen und der bevorzugten Anwendung kann insbesondere vorgesehen sein, dass als Objekt ein Tragflügel eingesetzt wird.

In einem weiteren Aspekt stellt die Erfindung ein Objekt bereit, das nach einem erfindungsgemäßen Verfahren erhältlich ist.

Ein mit einem entsprechenden Objekt erzielter Vorteil ist darin zu sehen, dass eine Optimierung der gewünschten Wirkung bei einer gleichzeitigen Minimierung der erforderlichen Adaptierung eines Objektes erreicht wird. Der Zielkonflikt, wonach für eine effektive Verringerung des Reibungswiderstandes außerordentlich hohe Aufwände zu tätigen sind, ist damit zufriedenstellend gelöst.

In einem weiteren Aspekt betrifft die Erfindung ein Verfahren zur Modifizierung einer Oberfläche eines im Einsatz von einem Fluid umströmten Objektes wie eines Tragflügels, wobei auf und/oder in der Oberfläche eine Struktur mit Riblets geschaffen wird, welche einen Strömungswiderstand des Objektes im Fluid verringert. Erfindungsgemäß ist vorgesehen, dass bei der Schaffung der Struktur mit Riblets auf und/oder in der Oberfläche Bereiche mit einer höheren Wandschubspannung am Profil bei Umströmung desselben mit Riblets versehen werden und Bereiche mit einer niedrigeren Wandschubspannung am Profil ohne Riblets ausgebildet werden, wobei die Riblets auf und/oder in einem Teilbereich der Oberfläche vorgesehen werden, in dem eine Steigung eines kumulierten Reibungswiderstandes mindestens 0,9, insbesondere von größer als 1,0 bis 0,9, beträgt, wobei ein an einem Oberflächenbereich bei einer Umströmung des Objektes in einem Fluid entlang einer Strömungsrichtung wirkender Reibungswiderstand berechnet und über eine Länge des Oberflächenbereiches in der Strömungsrichtung zu dem kumulierten Reibungswiderstand summiert wird, wobei der kumulierte Reibungswiderstand in % bezogen auf den gesamten Reibungswiderstand von 100 % und die Länge in % bezogen auf die gesamte Länge angegeben ist.

In diesem Teilaspekt der Erfindung kommt zum Tragen, dass verfahrensmäßig lediglich jene Bereiche eines Objektes mit Riblets versehen werden müssen, in welchen Bereichen höherer Wandschubspannung am Profil bei Umströmung desselben in einem Fluid gegeben sind, wohingegen die übrigen Bereiche ausgespart werden. Dabei kann insbesondere vorgesehen sein, dass die Wandschubspannung in Relation zu einem Reibungswiderstand, insbesondere einem kumulierten Reibungswiderstand gesetzt wird, wie dies bereits zuvor erläutert wurde.

Es werden lediglich jene Teilbereiche eines Objektes mit Riblets versehen, welche im Einsatz auch effektiv für eine Verringerung eines Reibungswiderstandes nutzbar sind. Es wird bewusst in Kauf genommen, dass übrige Teilbereiche eines Objektes, in welchen Riblets ausgespart bzw. nicht appliziert werden, auch in Bezug auf einen Reibungswiderstand minimiert werden könnten. Dies könnte zwar zu einer noch höheren Effektivität führen, würde allerdings die technischen und kostenmäßigen Aufwände drastisch erhöhen.

In jenen Bereichen, in welchen Riblets zur Anwendung kommen, können diese in Bezug auf eine punktuelle Wandschubspannung geeignet ausgelegt sein. Möglich ist es aber auch, dass die Ribletstruktur quasi gemittelt wird, wie dies in der EP 2 261 117 A2 offenbart ist. Eine entsprechende Berechnung der Ribletstrukturen gemäß diesem Dokument lässt sich auf alle erfindungsgemäßen Verfahren anwenden.

Die Struktur mit den Riblets kann insbesondere an einer Oberseite des Objektes geschaffen werden, insbesondere einer Saugseite eines Tragflügels für ein Flugzeug.

Die Struktur mit Riblets kann als Folie auf die Oberfläche des Objektes aufgebracht werden. Möglich ist es auch, wie zuvor ausgeführt, dass die Riblets direkt am Objekt eingeformt oder das Objekt durch Umformen bereits mit den Riblets erstellt wird. Ist eine Folie vorgesehen, so kann diese auf die Oberfläche geklebt werden. Die zuvor erläuterten Angaben zur Anbringung der Riblets, insbesondere deren prozentuale Verteilung über eine Längserstreckung eines Objektes, treffen analog für diese Verfahrensvariante zu.

Schließlich betrifft die Erfindung ein Objekt, das im Einsatz von einem Fluid umströmt wird, insbesondere Tragflügel, wie Tragflügel eines Flugzeuges, wobei vorgesehen ist, dass Bereiche der Oberfläche des Objektes mit einer höheren Wandschubspannung bei Umströmung desselben mit Riblets versehen sind und Bereiche mit einer niedrigeren Wandschubspannung der Umströmung ohne Riblets ausgebildet sind.

Im Weiteren ist die Erfindung anhand von Ausführungsbeispielen noch näher erläutert. In den Zeichnungen, auf welche dabei Bezug genommen wird, zeigen:
Fig. 1a eine schematische Darstellung eines Tragflügels im Querschnitt;
Fig. 1b eine schematische Darstellung eines Tragflügels im Querschnitt mit einem natürlichen Umschlag der strömenden Luft bzw. ohne Maßnahmen;
Fig. 2 eine schematische Darstellung von Strömungsverhältnissen bei einem Tragflügel gemäß Fig. 1a bei Anbringung eines Drahtes;
Fig. 3 eine schematische Darstellung der Strömungsverhältnisse bei stirnseitiger Anbringung einer rauen Oberfläche bei einem Tragflügel gemäß Fig. 1a;
Fig. 4 Simulationsergebnisse für eine Wandreibung (links) sowie eine Geschwindigkeitsverteilung (rechts) bei einem Tragflügel gemäß Fig. 1a bei einem Anstellwinkel von 8°;
Fig. 5 bis Fig. 8 Simulationsergebnisse für eine glatte Oberfläche eines Tragflügels gemäß Fig. 1a bei verschiedenen Anstellwinkeln;
Fig. 9 Wandreibungsverteilungen an einer Saugseite des Tragflügels gemäß Fig. 1a bei verschiedenen Anstellwinkeln;
Fig. 10 ein Diagramm betreffend Windkanalergebnisse bei Anbringung eines Drahtes gemäß Fig. 2 für verschiedene Ribletstrukturen;
Fig. 11 eine Anbringung von Riblets in verschiedenen Bereichen zum Diagramm gemäß Fig. 10;
Fig. 12 ein Diagramm betreffend Windkanalergebnisse bei Anbringung einer rauen Oberfläche gemäß Fig. 3 für verschiedene Ribletstrukturen;
Fig. 13 eine Anbringung von Riblets in verschiedenen Bereichen zum Diagramm gemäß Fig. 12;
Fig. 14 ein Diagramm betreffend Windkanalergebnisse bei natürlichem Umschlag gemäß Fig. 1b;
Fig. 15 eine Anbringung von Riblets in verschiedenen Bereichen zum Diagramm gemäß Fig. 14;
Fig. 16 ein Diagramm betreffend einen gesamten Reibungswiderstand über eine Länge des Tragflügels gemäß Fig. 1a.

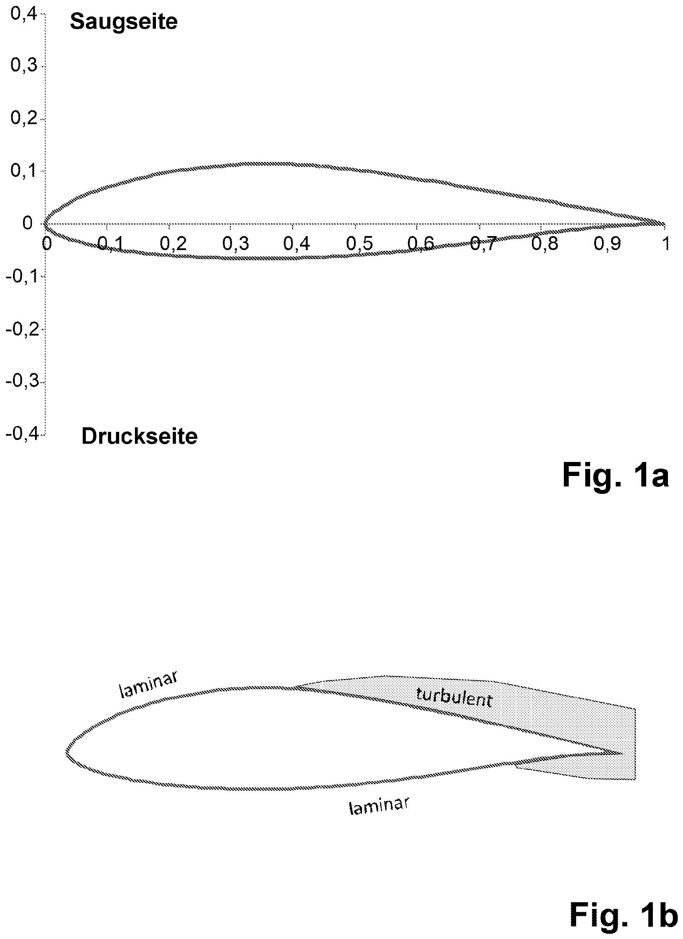

In Fig. 1a ist ein Tragflügel im Querschnitt dargestellt. Bei dem Tragflügel handelt es sich um ein asymmetrisches Profil. Ersichtlich ist in Fig. 1a die oberseitige Saugseite sowie die unterseitige Druckseite des Tragflügels. Ein entsprechender Tragflügel wurde für Windkanaltests verwendet. Im Bereich zwischen etwa 0,4 und 0,6 auf der x-Achse ist an der Saugseite in der Praxis ein Umschlag von einer laminaren in eine turbulente Strömung gegeben. Für die Unterseite bzw. Druckseite liegt der entsprechende Bereich etwa im Bereich von 0,7 bis 0,9 auf der x-Achse. Dies ist exemplarisch in Fig. 1b dargestellt.

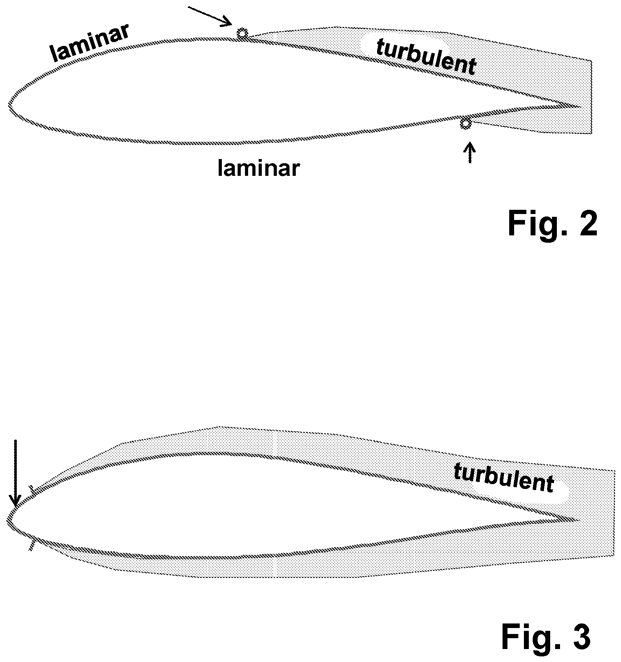

In Fig. 2 und Fig. 3 sind Strömungsverhältnisse an einem Tragflügel gemäß Fig. 1a dargestellt, wenn bewusst Störstellen eingebaut werden, um eine turbulente Strömung am Tragflügel zu erzeugen. Beispielsweise stellt die Situation in Fig. 2 reale Verhältnisse bzw. Übergänge nach, in welchen ein Grenzschichtumschlag von laminar auf turbulent erfolgt (vgl. Fig. 1a). In Fig. 2 sind sogenannte Stolperdrähte am Tragflügel angebracht. Die Stolperdrähte sind mit einem Pfeil gekennzeichnet. Diese Stolperdrähte führen bei Windkanaltests dazu, dass in den Bereichen hinter den Stolperdrähten eine turbulente Strömung am Tragflügel auftritt. Ein Stolperdraht kann dabei wie dargestellt sowohl an der Saugseite als auch an der Druckseite angeordnet werden. In beiden Fällen wird festgestellt, dass die Strömung hinter dem Stolperdraht (also bei Anströmung des Tragflügels von vorne in Strömungsrichtung) turbulent ist. Vor dem Stolperdraht ist eine laminare Strömung gegeben, wie dies auch in Fig. 2 dargestellt ist.

In Fig. 3 ist ebenfalls eine Störstelle am Tragflügel angebracht. In diesem Fall handelt es sich jedoch nicht um eine lineare Störstelle wie bei einem Stolperdraht, sondern um einen stirnseitigen Bereich, der mit einer gewissen Rauigkeit versehen wird. Dies führt dazu, dass bei Anströmung von vorne, also der linken Seite in Fig. 3, entlang der Strömungsrichtung hinter dem wiederum mit einem Pfeil gekennzeichneten Störbereich mit erhöhter Rauigkeit eine turbulente Strömung am Tragflügel gegeben ist. Eine entsprechende Rauigkeit kann beispielsweise mittels eines Klebebandes erzielt werden, das oberflächlich eine bestimmte Rauigkeit aufweist.

Mit entsprechenden Tragflügeln, die, wie nachstehend noch erläutert ist, mit Riblets modifiziert wurden, wurden Tests in einem Windkanal durchgeführt. Die Teststrecke betrug in der Breite 2000 mm, in der Höhe 1460 mm und in der Länge 3200 mm. Der Messtisch wurde 1500 mm von der Vorderkante positioniert.

Bei den Tests im Windkanal betrug ein Umgebungsdruck 97000 Pa. Die Umgebungstemperatur betrug 28 °C. Als Fluid wurde Luft mit einer Dichte von 1,122 kg/m³ verwendet. Die dynamische Viskosität betrug 18,62·10⁻⁶ Pas.

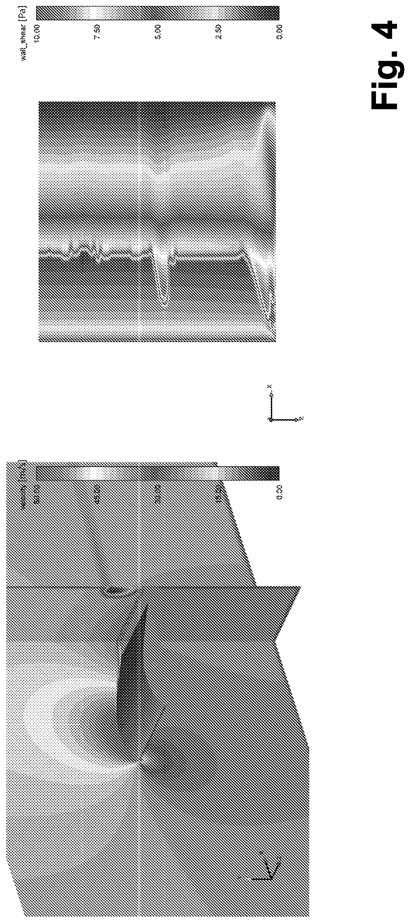

In Fig. 4 sind Simulationsergebnisse für eine glatte Oberfläche (ohne Riblets) bei einem Tragflügel gemäß Fig. 1a bzw. Fig. 1b dargestellt. In Fig. 4 ist links die Geschwindigkeitsverteilung gezeigt. Die Geschwindigkeit ist im Bereich der Saugseite und dort im anfänglichen Bereich des Tragflügels am größten und erreicht bis zu etwa 60 m/s. In Fig. 4 rechts ist die Wandreibung dargestellt, wobei die Wandschubspannung an der Saugseite dargestellt ist. Die entsprechende Simulation betrifft ein Szenario, bei dem der Tragflügel um 8° angestellt ist.

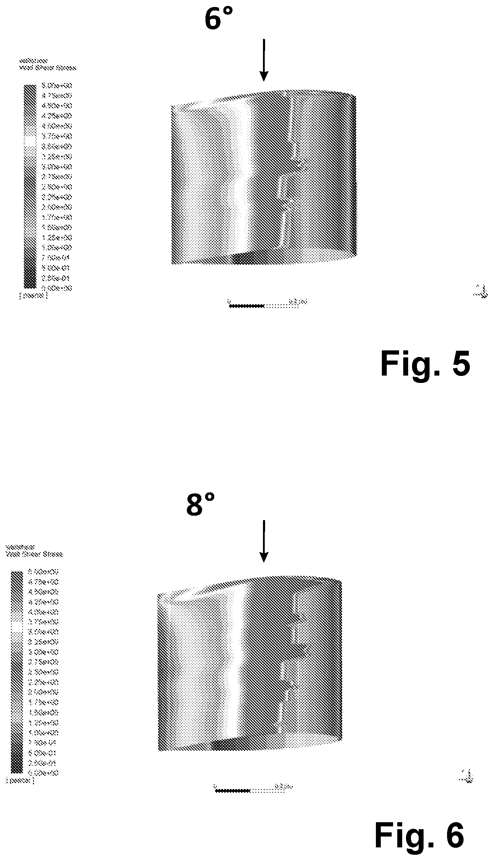

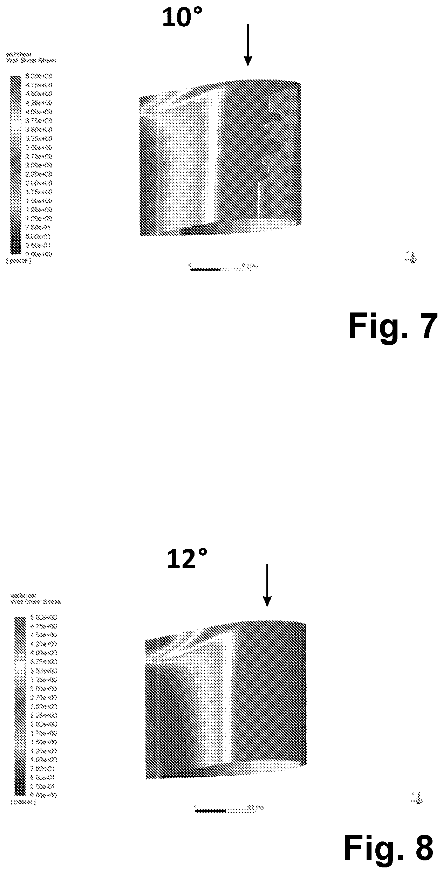

In Fig. 5 bis Fig. 8 sind Simulationsergebnisse ebenfalls für eine glatte Oberfläche desselben Tragflügels dargestellt. Wiederum ist die Wandschubspannung angegeben, die wie ersichtlich vom Anstellwinkel abhängig ist. Ebenfalls ersichtlich ist anhand der Abfolge der Anstellwinkel von 6° (Fig. 5) bis hin zu 12° (Fig. 8) in 2°-Schritten, dass sich an sich immer ein Bereich mit besonders hoher Wandschubspannung zeigt, in welchen Riblets die größte Wirkung entfalten könnten. Bei den Darstellungen in Fig. 5 bis Fig. 8, die in Schwarz-Weiß gehalten sind, entsprechen diese Bereiche jenen, die mit Pfeilen gekennzeichnet sind und in einer Farbdarstellung mit einer Skala von blau nach rot von geringer bis zu hoher Wandschubspannung rot erscheinen würden. Die entsprechenden Stellen sind mit einem Pfeil gekennzeichnet.

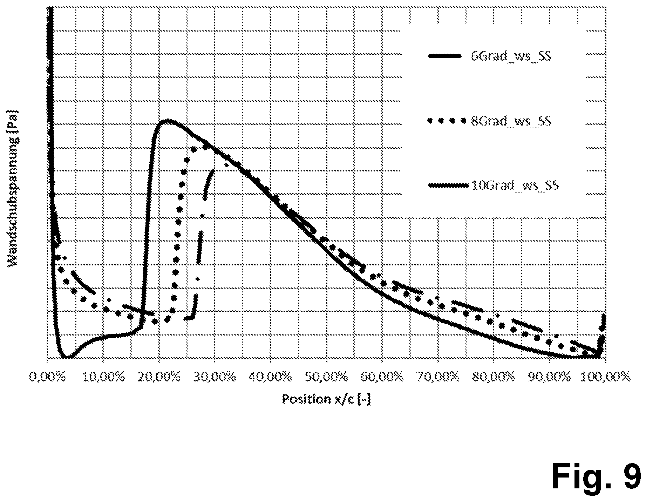

In Fig. 9 sind Wandreibungsverteilungen dargestellt, und zwar für die Saugseite des Tragflügels gemäß Fig. 1a bzw. einzelnen Simulationen gemäß Fig. 5 bis Fig. 8. Wie ersichtlich ist, gibt es in allen Fällen Bereiche, in welchen die Wandschubspannung relativ betrachtet besonders hoch ist bzw. eine hohe Wandreibung besteht. Mit zunehmendem Anstellwinkel verschiebt sich ein Startpunkt der Bereiche turbulenter Strömung nach vorne bzw. zu geringer Längserstreckung hin. Größere Anstellwinkel führen somit zu größerer Wandreibung.

Wird ein Stolperdraht angebracht, wie dies in Fig. 2 dargestellt ist, ergibt sich durch ein Aufbringen von Riblets eine Verbesserung der Strömung im Sinne einer Reduktion turbulenter Strömung.

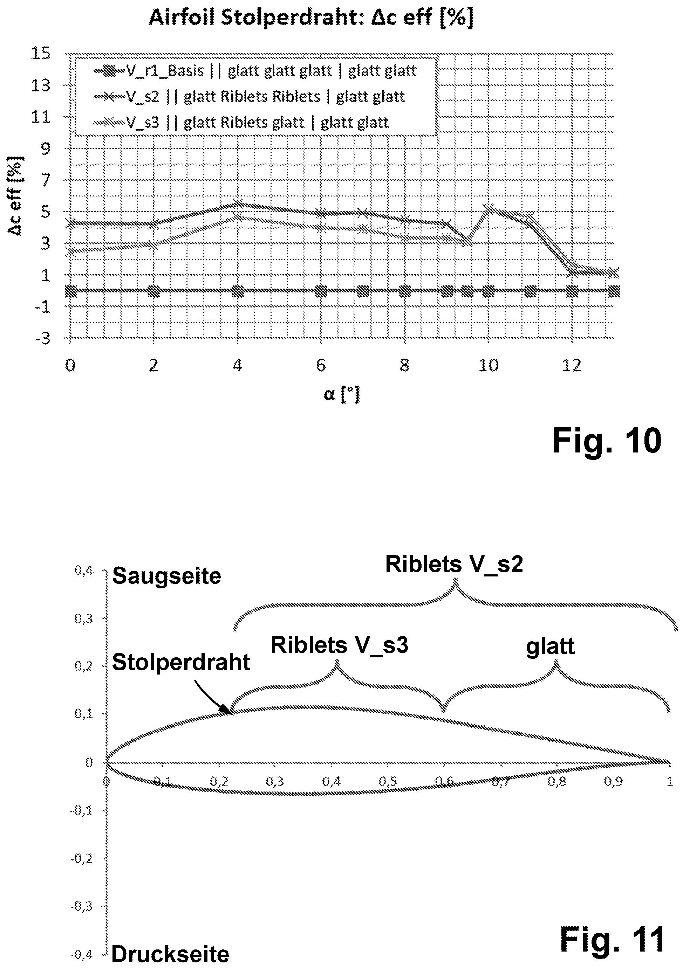

Auf Basis dieser Simulationen wurden praktische Versuche mit Profilen mit und ohne Störstellen bzw. Störbereichen gemäß Fig. 2 und Fig. 3 durchgeführt. In Fig. 10 sind entsprechende Messergebnisse für eine adaptierte Oberfläche gemäß Fig. 2 dargestellt. In Fig. 10 ist ersichtlich, dass die Effizienz, somit das Verhältnis von Auftrieb zu Widerstand (durch die Anbringung von Riblets) auf der Saugseite der Tragfläche gemäß Fig. 1a im Vergleich zu einer glatten Oberfläche steigt. Werden die Riblets wie in Fig. 11 dargestellt aufgebracht, also über unterschiedliche Längen des Tragflügels, so zeigt sich, dass die Ergebnisse mit Riblets V_s3 gemäß Fig. 10 nahezu so gut sind wie die Riblets V_s2. Mit anderen Worten: Auch wenn die Riblets V_s3 lediglich in einem viel kleineren Teilbereich, nämlich etwa in einem Bereich von 0,2 bis 0,6 der gesamten Längserstreckung des Tragflügels (20 % bis 60 %) angebracht sind, ergibt sich eine nahezu gleich gute Wirkung. Als Referenz dient V_r1, eine Anordnung mit Stolperdraht, aber ohne Riblets; aufgrund der relativen Berechnung (c_{eff} = Auftriebskraft/Widerstandskraft und Δc_{eff} = -100 + 100·c_{eff_riblets}/_{ceff_Giatt}) ergibt sich für diese Referenz eine Nulllinie.

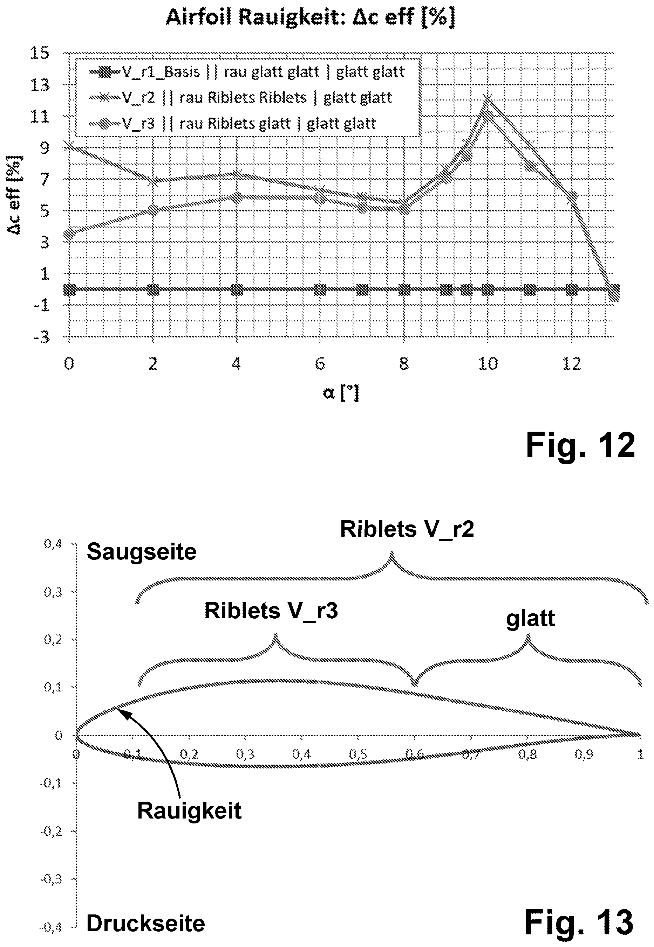

In Fig. 12 und Fig. 13 sind analoge Versuchsergebnisse für die Anordnung gemäß Fig. 3 dargestellt, also der Situation einer nachträglichen Anbringung einer vorbestimmten Rauigkeit an einer Stirnseite des Tragflügels, die im Einsatz angeströmt wird und sich an vorderster Stelle stromabwärts befindet. Auch in diesem Fall zeigt sich, dass der Widerstand durch Riblets reduziert werden kann, wobei die Riblets V_r3 ausreichend sind, um in weiten Bereichen die erforderliche Reduktion des Reibungswiderstandes zu erreichen. Die Riblets V_r2 sind zwar insgesamt betrachtet etwas überlegen, aber erfordern dafür auch eine proportional viel höhere Bedeckung der Tragflügeloberfläche und somit wesentlich mehr an Materialaufwand. Während die Riblets V_r3 lediglich in einem Teilbereich (bezogen auf eine Längserstreckung) von etwa 50 % angeordnet sind, sind die Riblets V_r2 über nahezu 90 % einer Sehnenlänge angeordnet. V_r1 stellt wie V_r1 in Fig. 10 die Referenz dar, nämlich die Nulllinie, in diesem Fall einen Tragflügel gemäß Fig. 1a mit der dem Experiment zugrundeliegenden Rauigkeit, der jedoch ohne Riblets ausgestattet ist.

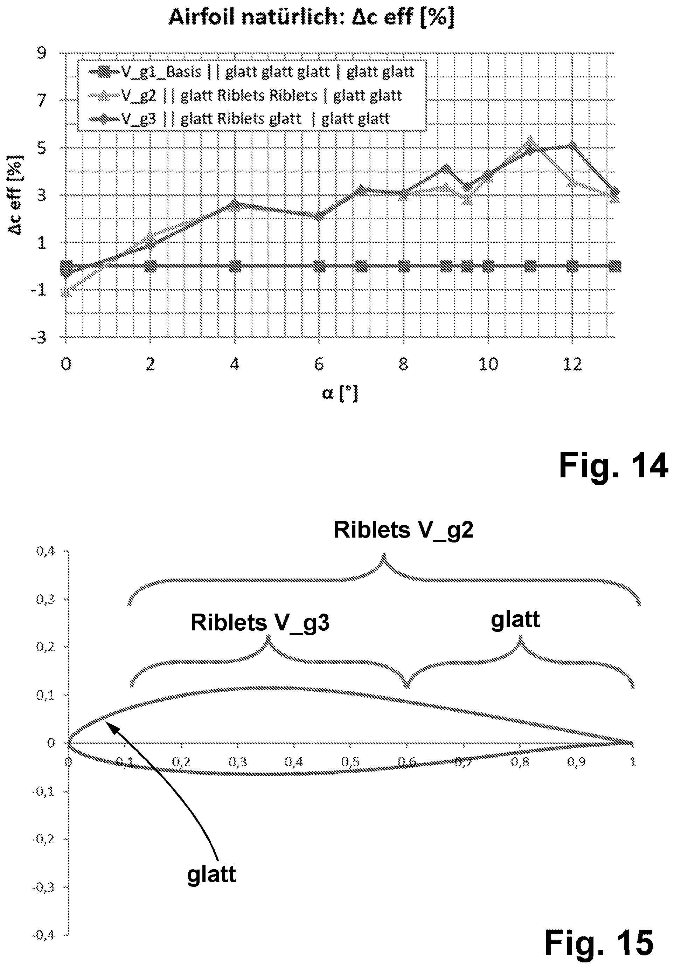

In Fig. 14 und Fig. 15 sind entsprechende Ergebnisse für einen natürlichen Umschlag, also Realbedingungen, gezeigt. Wie ersichtlich ist, ergeben sich auch unter Realbedingungen deutliche Effizienzsteigerungen, wenn Riblets bloß zonal bzw. bereichsweise angeordnet werden. Lediglich bei sehr geringen Anstellwinkeln ist eine geringfügige Einbuße gegeben, sobald allerdings in praktisch relevanten Anstellwinkeln gearbeitet wird, zeigen sich die Vorteile von Riblets, wobei eine zonale Belegung zur Erzielung einer hohen Effizienzsteigerung bereits ausreichend ist.

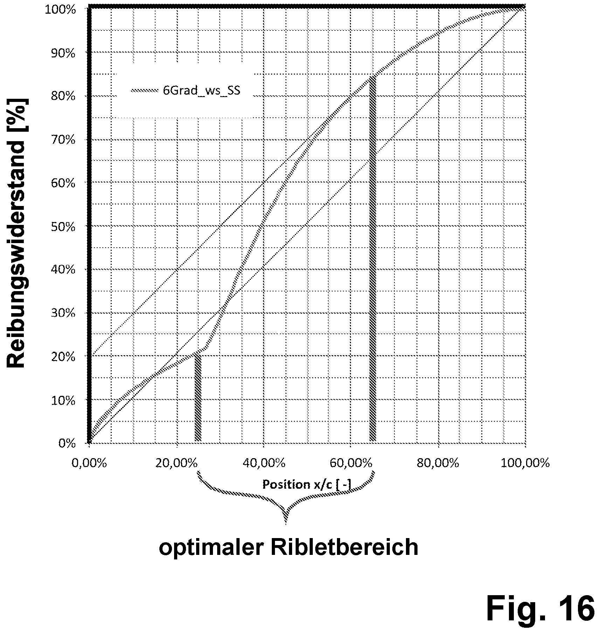

Die entsprechenden Ergebnisse lassen sich insbesondere anhand von Fig. 16 sehr anschaulich darstellen. Wie in Fig. 16 dargestellt ist, summiert sich der gesamte Reibungswiderstand entlang einer Längsachse eines Tragflügels zu letztlich 100 %. In jenen Bereichen, in welchen der Reibungswiderstand besonders groß ist, ergibt sich für die entsprechende Kurve des kumulierten Reibungswiderstandes eine Steigung von >1. Exakt in jenen Bereichen ist es erforderlich, die Riblets anzubringen, um einen größtmöglichen Effekt derselben zu erreichen. Dies kann bevorzugt in einem durchgehenden Bereich erfolgen, bis die Steigung 0,9 erreicht. Unter dieser Steigung (also bei flacher verlaufender Kurve des kumulierten Reibungswiderstandes) ist es nicht mehr erforderlich, Riblets vorzusehen.

Obwohl die bereichsweise bzw. zonale Anbringung der Riblets nicht unbedingt durchgehend sein muss, ist es dennoch bevorzugt, dass eine Teilfläche eines Tragflügels oder eines anderen Objektes durchgehend mit Riblets bedeckt ist. In den übrigen Bereichen, in welchen die Bedingungen für eine hohe Effektivität der Riblets nicht gegeben sind, erfolgt eine Aussparung bzw. sind keine Riblets vorgesehen. Bei einem Tragflügel gemäß Fig. 1a kann es somit in der Praxis auftreten, dass ein stirnseitiger Bereich und ein endseitiger Bereich ribletfrei ausgebildet ist, wohingegen in einem mittigen Bereich Riblets vorgesehen sind, und zwar durchgehend. Durchgehend bezieht sich in diesem Fall nicht auf die Struktur der Riblets selbst, sondern auf den flächigen Bereich, welcher mit Riblets bedeckt ist.

Ein erfindungsgemäßes Verfahren und ein entsprechend hergestelltes Objekt zeichnen sich dadurch aus, dass bei einem minimierten Aufwand eine größtmögliche Effizienzsteigerung gegeben ist. Durch eine vollflächige Bedeckung mit Riblets könnte zwar eine noch größere Effizienzsteigerung erreicht werden, dies wird allerdings durch erheblich größere Produktionsaufwände, insbesondere ein deutliches Mehr an Riblets bzw. Ribletstrukturen und deren erforderlichen Herstellung konterkariert.

## Patentansprüche

1. Verfahren zur Herstellung eines mit Riblets auf und/oder in der Oberfläche versehenen Objektes, welches im Einsatz von einem Fluid umströmt wird, **dadurch gekennzeichnet, dass** ein an einem Oberflächenbereich bei einer Umströmung des Objektes in einem Fluid entlang einer Strömungsrichtung wirkender Reibungswiderstand berechnet und über eine Länge des Oberflächenbereiches in der Strömungsrichtung zu einem kumulierten Reibungswiderstand summiert wird, wonach die Riblets auf und/oder in einem Teilbereich der Oberfläche vorgesehen werden, in dem eine Steigung des kumulierten Reibungswiderstandes mindestens 0,9, insbesondere von größer als 1,0 bis 0,9, beträgt, wobei der kumulierte Reibungswiderstand in % bezogen auf den gesamten Reibungswiderstand von 100 % und die Länge in % bezogen auf die gesamte Länge angegeben ist.

2. Verfahren nach Anspruch 1, **dadurch gekennzeichnet, dass** der entlang der Strömungsrichtung wirkende Reibungswiderstand punktuell berechnet wird.

3. Verfahren nach Anspruch 1 oder 2, **dadurch gekennzeichnet, dass** der entlang der Strömungsrichtung wirkende Reibungswiderstand an mehreren Punkten in einer Ebene quer zur Strömungsrichtung, insbesondere entlang einer Geraden liegenden Punkten in einer Ebene quer zur Strömungsrichtung, berechnet und gemittelt wird, wonach aus den so berechneten und gemittelten Reibungswiderständen der kumulierte Reibungswiderstand summiert wird.

4. Verfahren nach einem der Ansprüche 1 bis 3, **dadurch gekennzeichnet, dass** die Riblets in einem Bereich von 20 % bis 90 %, bevorzugt 25 % bis 85 %, insbesondere 30 % bis 80 %, der Längserstreckung der Oberfläche in Strömungsrichtung vorgesehen werden.

5. Verfahren nach einem der Ansprüche 1 bis 4, **dadurch gekennzeichnet, dass** die Riblets nur in einem Teilbereich der Oberfläche vorgesehen werden.

6. Verfahren nach einem der Ansprüche 1 bis 5, **dadurch gekennzeichnet, dass** die Riblets unmittelbar oder mittelbar auf einem Tragflügel vorgesehen werden.

7. Verfahren nach einem der Ansprüche 1 bis 6, **dadurch gekennzeichnet, dass** eine, insbesondere biegbare, Folie, welche die Riblets trägt bzw. in welcher die Riblets eingeformt sind, auf die Oberfläche des Objektes aufgebracht wird.

8. Verfahren nach einem der Ansprüche 1 bis 7, **dadurch gekennzeichnet, dass** als Objekt ein Tragflügel eingesetzt wird.

9. Objekt, erhältlich nach einem der Ansprüche 1 bis 8, wobei die Riblets nur in dem Teilbereich der Oberfläche vorgesehen sind.

10. Verfahren zur Modifizierung einer Oberfläche eines im Einsatz von einem Fluid umströmten Objektes wie eines Tragflügels, wobei auf und/oder in der Oberfläche eine Struktur mit Riblets geschaffen wird, welche einen Strömungswiderstand des Objektes verringert, **dadurch gekennzeichnet, dass** bei der Schaffung der Struktur mit Riblets auf und/oder in der Oberfläche Bereiche mit einer höheren Wandschubspannung am Profil bei Umströmung desselben mit Riblets versehen werden und Bereiche mit einer niedrigeren Wandschubspannung am Profil ohne Riblets ausgebildet werden, wobei die Wandschubspannung in Relation zu einem kumulierten Reibungswiderstand gesetzt wird und wobei Riblets auf und/oder in einem Teilbereich der Oberfläche vorgesehen werden, in dem eine Steigung eines kumulierten Reibungswiderstandes mindestens 0,9, insbesondere von größer als 1,0 bis 0,9, beträgt, wobei ein an einem Oberflächenbereich bei einer Umströmung des Objektes in einem Fluid entlang einer Strömungsrichtung wirkender Reibungswiderstand berechnet und über eine Länge des Oberflächenbereiches in der Strömungsrichtung zu dem kumulierten Reibungswiderstand summiert wird, wobei der kumulierte Reibungswiderstand in % bezogen auf den gesamten Reibungswiderstand von 100 % und die Länge in % bezogen auf die gesamte Länge angegeben ist.

11. Verfahren nach Anspruch 10, **dadurch gekennzeichnet, dass** die Struktur mit Riblets an einer Oberseite des Profils geschaffen wird, insbesondere einer Saugseite eines Tragflügels für ein Flugzeug.

12. Verfahren nach Anspruch 10 oder 11, **dadurch gekennzeichnet, dass** die Struktur mit Riblets als Folie auf die Oberfläche des Objektes aufgebracht wird.

13. Verfahren nach Anspruch 12, **dadurch gekennzeichnet, dass** die Folie auf die Oberfläche geklebt wird.

## Claims

1. A method for producing an object which is provided with riblets on and/or in the surface and around which a fluid flows during use, **characterised in that** a frictional resistance acting along a flow direction in a surface region when a fluid flows around the object is calculated and added to a cumulative frictional resistance in the flow direction over a length of the surface region, after which the riblets are provided on and/or in a partial region of the surface in which a gradient of the cumulative frictional resistance is at least 0.9, in particular greater than 1.0 to 0.9, wherein the cumulative frictional resistance is given in % related to the total frictional resistance of 100% and the length is given in % related to the total length.

2. The method according to claim 1, **characterised in that** the frictional resistance acting along the flow direction is calculated at points.

3. The method according to claim 1 or 2, **characterised in that** the frictional resistance acting along the flow direction is calculated and averaged at a plurality of points in a plane transverse to the flow direction, in particular along points lying along a straight line in a plane transverse to the flow direction, after which the cumulative frictional resistance is added up from the friction resistances thus calculated and averaged.

4. The method according to any one of claims 1 to 3, **characterised in that** the riblets are provided in a range from 20% to 90%, preferably 25% to 85%, in particular 30% to 80%, of the longitudinal extension of the surface in the flow direction.

5. The method according to any one of claims 1 to 4, **characterised in that** the riblets are provided only in a partial region of the surface.

6. The method according to any one of claims 1 to 5, **characterised in that** the riblets are provided directly or indirectly on a wing.

7. The method according to any one of claims 1 to 6, **characterised in that** an in particular bendable film, which carries the riblets and in which the riblets are moulded, is applied on the surface of the object.

8. The method according to any one of claims 1 to 7, **characterised in that** a wing is used as the object.

9. An object obtainable according to any one of claims 1 to 8, wherein the riblets are provided only in the partial region of the surface.

10. A method for modifying a surface of an object, such as a wing, around which a fluid flows during use, wherein a structure with riblets is created on and/or in the surface, which structure reduces a flow resistance of the object, **characterised in that**, with the creation of the structure with riblets on and/or in the surface, regions with a higher wall shear stress on the profile when a flow takes place around the same are provided with riblets, and regions with a lower wall shear stress on the profile are formed without riblets, wherein the wall shear stress is related to a cumulative frictional resistance, and wherein riblets are provided on or in a partial region of the surface, in which a gradient of a cumulative frictional resistance is at least 0.9, in particular greater than 1.0 to 0.9, wherein a frictional resistance acting along a flow direction in a surface region when a fluid flows around the object is calculated and added to the cumulative frictional resistance over a length of the surface region in the flow direction, wherein the cumulative frictional resistance is given in % related to the total frictional resistance of 100% and the length is given in % related to the total length.

11. The method according to claim 10, **characterised in that** the structure with riblets is created on an upper side of the profile, in particular a suction side of a wing for an aircraft.

12. The method according to claim 10 or 11, **characterised in that** the structure with riblets is applied to the surface of the object as a film.

13. The method according to claim 12, **characterised in that** the film is glued onto the surface.

## Revendications

1. Procédé de fabrication d'un objet doté de microrainures sur et/ou dans la surface, lequel est entouré en utilisation par l'écoulement d'un fluide, **caractérisé en ce qu'**une résistance au frottement agissant sur une zone de surface lors d'un écoulement autour de l'objet d'un fluide le long d'une direction d'écoulement est calculée et est totalisée sur une longueur de la zone de surface dans la direction d'écoulement en une résistance au frottement cumulée, les microrainures étant prévues de ce fait sur et/ou dans une partie de zone de la surface, dans laquelle une augmentation de la résistance au frottement cumulée est au moins 0,9, est en particulier supérieure à 1,0 jusqu'à 0,9, sachant que la résistance au frottement cumulée est indiquée en % en référence à la résistance au frottement totale de 100 % et la longueur en % en référence à la longueur totale.

2. Procédé selon la revendication 1, **caractérisé en ce que** la résistance au frottement agissant le long de la direction d'écoulement est calculée de façon ponctuelle.

3. Procédé selon la revendication 1 ou 2, **caractérisé en ce que** la résistance au frottement agissant le long de la direction d'écoulement est calculée et mise en moyenne sur plusieurs points dans un plan transversalement à la direction d'écoulement, en particulier à des points situés le long d'une droite dans un plan transversalement à la direction d'écoulement, la résistance au frottement cumulée étant de ce fait totalisée à partir des résistances au frottement ainsi calculées et mises en moyenne.

4. Procédé selon l'une quelconque des revendications 1 à 3, **caractérisé en ce que** les microrainures sont prévues dans la direction d'écoulement dans une zone de 20 % à 90 %, de préférence de 25 % à 85 %, en particulier de 30 % à 80 % de l'extension longitudinale de la surface.

5. Procédé selon l'une quelconque des revendications 1 à 4, **caractérisé en ce que** les microrainures ne sont prévues que dans une partie de zone de la surface.

6. Procédé selon l'une quelconque des revendications 1 à 5, **caractérisé en ce que** les microrainures sont indirectement ou directement prévues sur une aile portante.

7. Procédé selon l'une quelconque des revendications 1 à 6, **caractérisé en ce qu'**une feuille en particulier flexible, qui porte les microrainures ou dans laquelle les microrainures sont mises en forme, est appliquée sur la surface de l'objet.

8. Procédé selon l'une quelconque des revendications 1 à 7, **caractérisé en ce qu'**une aile portante est utilisée en tant qu'objet.

9. Objet pouvant être obtenu selon l'une quelconque des revendications 1 à 8, sachant que les microrainures ne sont prévues que dans la partie de zone de la surface.

10. Procédé de modification d'une surface d'un objet entouré par l'écoulement d'un fluide, comme une aile portante, sachant que sur et/ou dans la surface est créée une structure avec des microrainures, laquelle réduit une résistance à l'écoulement de l'objet, **caractérisé en ce que** lors de la création de la structure avec des microrainures sur et/ou dans la surface, des zones avec une contrainte de frottement superficiel plus élevée sur le profil lors de l'écoulement autour de celui-ci sont dotées de microrainures et des zones avec une contrainte de frottement superficiel plus faible sur le profil sont constituées sans microrainures, sachant que la contrainte de frottement superficiel est fixée par rapport à une résistance au frottement cumulée et sachant que des microrainures sont prévues sur et/ou dans une partie de zone de la surface dans laquelle une augmentation d'une résistance au frottement cumulée est au moins de 0,9, en particulier supérieure à 1,0 jusqu'à 0,9, sachant qu'une résistance au frottement agissant sur une zone de surface lors d'un écoulement autour de l'objet dans un fluide le long d'une direction d'écoulement est calculée et est totalisée sur une longueur de la zone de surface dans la direction d'écoulement en résistance au frottement cumulée, sachant que la résistance au frottement cumulée est indiquée en % en référence à la résistance au frottement totale de 100 % et la longueur en % en référence à la longueur totale.

11. Procédé selon la revendication 10, **caractérisé en ce que** la structure est créée avec des microrainures sur une face supérieure du profil, en particulier une face d'aspiration d'une aile portante pour un avion.

12. Procédé selon la revendication 10 ou 11, **caractérisé en ce que** la structure avec des microrainures est appliquée sous la forme d'une feuille à la surface de l'objet.

13. Procédé selon la revendication 12, **caractérisé en ce que** la feuille est collée à la surface.
